# EUROPEAN PATENT APPLICATION

(11) **EP 1 777 283 A1**
(43) Date of publication of application: **25.04.2007**
(21) Application number: 03781162.7
(22) Date of filing: 14.11.2003
(51) Int. Cl.: C10G 9/36, B01J 10/00

(54) **METHOD AND REACTOR FOR HYDROCARBON CONVERSION BY A CASCADE OXYDATION CRACKING**

(71) Applicant: PUGACHEV, Alexandr Vasilievich, Moscow, 121170 (RU); Torshin, Dmitry Alexandrovich, Moscow, 105568 (RU); Filippov, Victor Borisovich, Moscow, 113634 (RU)
(72) Inventor: PUGACHEV, Alexandr Vasilievich, Moscow, 121170 (RU); Torshin, Dmitry Alexandrovich, Moscow, 105568 (RU); Filippov, Victor Borisovich, Moscow, 113634 (RU)
(74) Representative: Einsel, Martin
(86) International application number: PCT/RU2003/000492
(87) International publication number: WO 2005/047426

(57) **Abstract**

The method and reactor of this invention are designed to convert liquid and gaseous hydrocarbon of petroleum and plant origin.

Conversion is effected by oxidizing cracking in stages, including moving a stream of a reaction mixture of hydrocarbons into and through successive reaction zones and re-intensifying the process by feeding additional quantities of an oxidant into the reaction zone of each successive stage. As a result, the components of the reaction mixture are cracked at a higher conversion rate.

Multistage oxidizing cracking is effected in reactors comprising reaction zones arranged in succession. The reactors may have clearly distinct reaction zone dividers (using structural elements) or indistinct reaction zone dividers (without structural elements).

Low-temperature (400°C to 800°C) multistage oxidizing cracking is effected without catalysts; it is cost-effective and easily controlled.

Reactors may be portable, home-based, mobile, or stationary and have different sizes.

## Description

### Prior Art

This invention relates to a method of converting hydrocarbons. In methods existing in the art, liquid hydrocarbons are converted to obtain liquid and gaseous products by multistage high-temperature thermal cracking in reactors (U.S. Patent 4,477,334), in particular, using high-temperature catalysts. Further conventional methods are used to convert gaseous hydrocarbons into other gaseous hydrocarbons, or synthesis gas (RU Patent 2,117,626). More specifically, these methods compress source gas to initiate self-ignition thereof in a cylinder or set off incomplete combustion, or coat the internal surfaces of a cylinder with catalyst (RU Patent 2,120,213). Conversion processes of the prior art methods are carried out at temperatures between 1,300 °C and 2,300 °C.

The prior art methods use conversion of two types: (1) liquid hydrocarbons to liquid and gaseous hydrocarbons and (2) gaseous hydrocarbons to gaseous hydrocarbons. These methods are used to reprocess petroleum products.

The closest prior art of the present invention in technical idea is a method of converting gasoline into a mixture of combustible petroleum gases and adding them to the air-fuel mixture in internal combustion engines (ICE). A moving stream of the fuel mixture and gases is produced by the ICE itself during evacuation on intake (RU Patent 2,141,054). The method comprises preparing an enriched air-fuel mixture (α < 0.4), heating the mixture, initiating it thermally by an activator during oxidizing cracking, and mixing the resultant petroleum gases with the basic air-fuel mixture entering the ICE cylinders. This method can only be used in an ICE combusting the resultant mixture of petroleum gases. Gases are produced from the liquid fuel burned in the ICE. No catalysts are used in the method.

The prior ort method is unsuitable for producing combustible gas from liquid or gaseous hydrocarbons of different types and for different consumers and purposes.

The aim of this invention is to perform low temperature conversion of petroleum and plant origin into a mixture of fuel gases.

### Brief Description of the invention

The method of this invention comprises:
- preparing a mixture of liquid or gaseous hydrocarbons and air (at an excess air ratio α = 0.2-0.5), or another oxidant;
- heating the mixture, for example, by compression, to a required temperature;
- feeding the heated mixture into the reaction zone;
- initiating a low-temperature oxidizing cracking process;
- moving the partially cracked mixture to the next reaction zone (or zones);
- feeding an additional oxidant (air, oxygen, steam, and so on) into said next reaction zone (or zones); initiating an oxidizing process in the reaction zone (or zones) by an activator; and
- cooling the resultant gases (at the consumer output and, in need, during the oxidizing cracking process).

The method is cost-effective and allows the composition of the mixture of resultant gases to be varied significantly and several gaseous mixtures of different compositions to be obtained simultaneously. The method does not require catalysts, because fatty mixture components leave an oil film on the surfaces in contact therewith, making catalysts ineffective. The method does not require the mixture being converted to be ignited, or high pressures and temperatures to be used. According to the present method, oxidizing cracking is effected successively in several reaction zones at a rising conversion (oxidation) rate, that is, it is a high-conversion multistage oxidizing cracking process.

### Brief Description of the Drawings

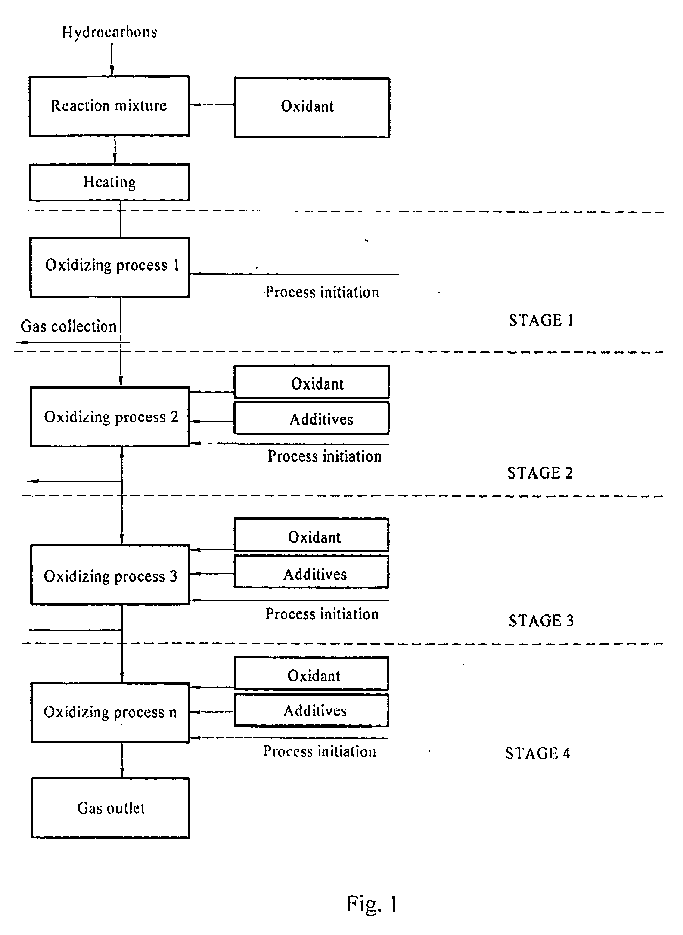

**Fig. 1** shows a functional diagram of the oxidizing cracking method;
**Fig. 2** shows a flow chart of multistage oxidizing cracking;
**Fig. 3** shows a reactor having disk-shaped (distinct) reaction zone dividers;
**Fig. 4** shows a reactor having a spiral (indistinct) reaction zone divider; and
**Fig. 5** shows a direct-flow reactor having clearly distinct reaction zone dividers.

References in the figures are unrelated.

### Detailed Description of the invention

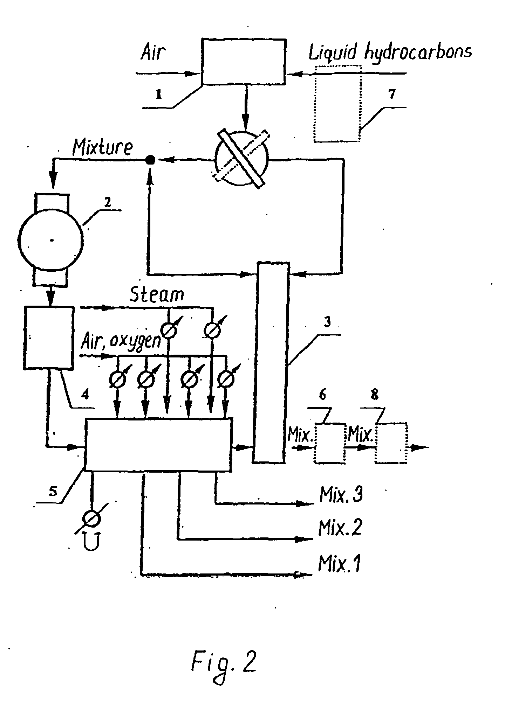

The method of this invention is performed, for example, as follows (Fig. 2). Liquid hydrocarbons and oxidant (air or air enriched with oxygen, or oxygen) are fed into a mixer 1. The resultant mixture (at an excess air ratio of α = 0.2-0.5) is fed to a compressor 2. The mixture may be preheated in a heat exchanger 3. The mixture is compressed in the compressor. As a result, the temperature of the compressed mixture is raised, and when the temperature reaches the required point (accordingly, pressure rises to the required point, too), the exhaust valve of the compressor opens to release the mixture into a reactor 5. The initial mixture upstream of the reactor is to have a temperature of at least 300 °C or 350 °C. When a piston compressor is used, the mixture is passed through a receiver 4 to reduce mixture pressure pulsations. Aside from compressing the mixture and raising the temperature thereof (which may be done in heat exchanger 3 as well), the compressor propels the stream of initial mixture and resultant gases through the reactor.

The reactor may consist of two or more reaction zones. The heated mixture is brought into contact with an activator, such as a heating element that initiates the process, in the first zone. The activator surface is heated to a temperature below the self-ignition point of the mixture in that zone. It is enough for maintaining a regular process to have the activator temperature 100°C to 150°C above the temperature of the initial mixture in the first reaction zone. The process may be initiated by the oxidant itself in elevated temperature zones (reactor zones where the inflowing oxidant is distributed evenly).

The oxidation reaction developing in these conditions releases heat, but does not ignite the mixture. The temperature in the zone rises (by 50°C to 150°C). Accordingly, a significant proportion of liquid hydrocarbons is cracked to produce a mixture of "petroleum" gases.

The process develops almost instantaneously in the reaction mixture. The partially converted mixture is advanced to the next reaction zone, which is supplied with a fresh portion of oxidant as well, within the acceptable range of α values. The process is initiated similarly in the second zone. The liquid hydrocarbons and gases produced in the preceding zone are cracked still more.

The process is conducted similarly in all the reaction zones of the reactor. The gaseous mixtures downstream of each reaction zone, and of each successive stage, have different compositions, consistent with high-conversion oxidizing cracking. The resultant gaseous mixtures may be drawn off for consumer needs downstream of each stage.

The content of oxidizing cracking products of straight-run gasoline in a six-zone reactor at process temperatures of 350°C to 600°C is shown in Table 1 (other process parameters being the same).

**Table 1. Content of products (% by weight) obtained by oxidizing cracking at different temperatures**

| Product name | 350°C | 400°C | 450°C | 500°C | 550°C | 600°C |
|---|---|---|---|---|---|---|
| H₂ | Traces | 0.01 | 0.02 | 0.13 | 0.43 | 1.32 |
| CH₄ | 2.09 | 4.49 | 4.88 | 6.33 | 13.57 | 21.51 |
| C₂H₆ | 15.44 | 14.44 | 14.24 | 14.99 | 14.95 | 14.67 |
| C₂H₄ | 18.96 | 21.57 | 22.86 | 25.35 | 26.76 | 28.57 |
| C₃H₈ | 11.52 | 11.36 | 11.32 | 9.39 | 7.28 | 6.91 |
| i-C₄H₁₀ | 5.73 | 7.50 | 6.74 | 6.48 | 6.54 | 4.82 |
| n-C₄H₁₀ | 16.53 | 19.70 | 18.78 | 18.34 | 17.12 | 11.82 |
| CO | - | - | - | 0.15 | 0.39 | 0.66 |
| CO₂ | 6.76 | 2.56 | 1.98 | 2.36 | 2.32 | 2.25 |
| Conversion, *X* % | 76.89 | 80.97 | 89.32 | 83.67 | 88.73 | 92.49 |
| C₅ + | 23.11 | 19.03 | 19.68 | 16.33 | 11.27 | 7.51 |
| Total | 100.00 | 100.00 | 100.00 | 100.00 | 100.00 | 100.00 |
| STAGE | 1 | 2 | 3 | 4 | 5 | 6 |

| | | | | | | |
|---|---|---|---|---|---|---|
| (The products were analyzed in a gas-liquid chromatograph, Color-100, at the Chemotology Research Institute) | | | | | | |

The yield of CH₄, C₂H₄, and H₂ rises slowly within the temperature range of 350°C to 500°C, and the concentration of C₃H₈, i-C₄H₁₀, and n-C₄H₁₀ drops. The content of light products - H₂, CH₄, and C₂H₄ - in the gaseous mixture increases sharply at temperatures of 500°C to 600°C. Continued high-conversion oxidation at still higher temperatures, without modification in other process parameters, may cause formation of CO₂ and generation of soot hydrocarbon.

According to Table 1, the conversion rate of, for example, gasoline, with temperature rising from 350°C to 600°C, grows from 76% to 92.65%, while under conventional cracking conditions at temperatures up to 600°C it increases from 34.69% to 38.68%. Table 2 shows conversion results of octane number 92 gasoline by two-stage oxidizing cracking at 400°C in both zones (check sample).

**Table 2**

| Component | %, by volume | %, by weight |
|---|---|---|
| Hydrogen (H₂) | 8.92 | 0.37 |
| Methane (CH₄) | 20.82 | 6.02 |
| Ethane (C₂H₆) | 3.72 | 2.31 |
| Ethylene (C₂H₄ | 3.35 | 1.94 |
| Acetylene (C₂H₂) | 2.97 | 1.47 |
| Propane (C₃H₈) | 3.40 | 3.08 |
| Propylene (C₃H₆) | 7.43 | 6.47 |
| Isobutane (i-C₄H₁₀) | 11.89 | 14.26 |
| N-butane (n-C₄H₁₀) | 14.87 | 17.83 |
| Remaining gasoline (C₅₊) | 24.91 | 46.36 |
| Total: | 100.00 | 100.00 |

| | | |
|---|---|---|
| Gasoline conversion rate *X* = 53.64%. | | |

Chromatographic analysis was conducted at the Lomonosov Public Academy of Fine Chemical Technologies in Moscow.

A sample of end gas was subjected to chromatographic analysis in a gas chromatographer model HL-4.

In order to obtain a high hydrocarbon conversion rate, it is unreasonable to raise the oxidizing process temperature significantly in the reactor zones. This is achieved by reducing the quantity of oxidant fed into each zone; feeding a cooled oxidant (except for the first zone); supplying a "cool" water vapor to the last zones (to prevent release of "soot" hydrocarbon); lowering the excess air ratio (and oxygen, adjusted) in successive stages (by about 0.05 to 0.08 per stage); applying forced cooling of reactor zones from the outside, and so on.

The gaseous mixture produced in the last stage is cooled in heat exchanger 3 (giving off heat to raise the temperature of the initial mixture). The heat of hot gases may be used to produce water vapor (in a heat exchanger 6) or to heat initial hydrocarbons (in a heat exchanger 7). Ready gases are pumped to an accumulator 8, and further on to consumer.

The multistage oxidizing cracking process may have clearly distinct reaction zones (formed by structural elements) or indistinct reaction zones arranged in stages, each defined at the points of mixture inlet, oxidant (additive) inlet, activator location, and the point where the gaseous mixture flows from one zone to the next one.

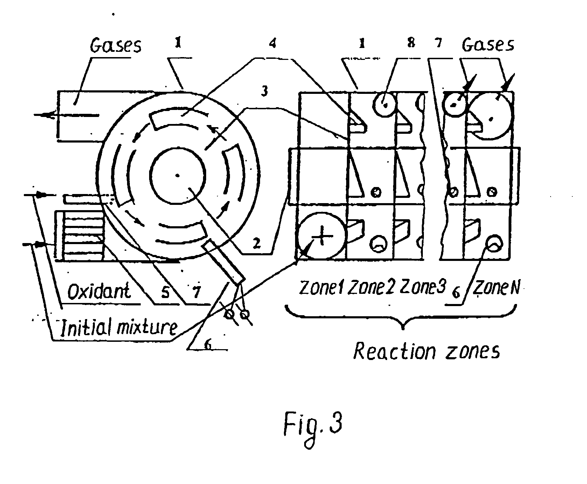

**Fig. 3** is a diagrammatic view of a reactor having clearly distinct zones designed as dividers. The interior of the reactor is formed by an outer cylinder 1 and an inner cylinder 2 with disk-shaped partitions 3 arranged on a common axis at right angles thereto. The annular spaces between the dividing disks are thermo-oxidizing zones (1 to N zones). The dividers have slits 4 provided with guide deflectors to cause the stock mixture fed into the reactor under pressure to move around in circles. Initial mixture is admitted into the reactor through an acceleration gateway 5, which is an array of orifices (ducts) of small cross-sectional area to accelerate the stream in the gateway to a high velocity. This device prevents possible blowbacks of flame should a flash occur in the first zone. The initial mixture stream flowing into the first zone moves in a circle to make contact with an activator 6 that initiates a thermo-oxidizing process. Incoming pressurized mixture pushes the remaining mixture and gases produced in that zone through slits 4 into the next zone.

Oxidant is fed through inlets 7 provided with dispersers into the second and successive zones for oxidizing cracking to be continued. The process is initiated in the zones by the activator. The mixture may be drawn off from each zone through a collector 8,

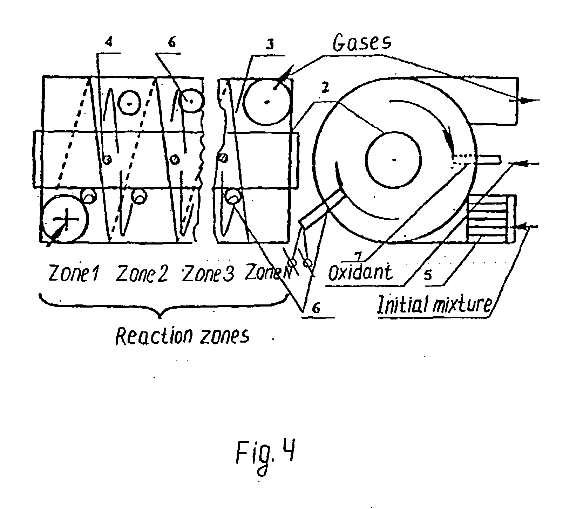

A reactor having indistinct reaction zones, shown in Fig. 4, has a spiral-shaped duct defined between an outer cylinder 1 and an inner cylinder 2 by a single solid partition 3 having no orifices or slits. The spiral-shaped duct lacks structural elements separating one zone from another mechanically. Oxidant is fed into this reactor through inlets 4 provided in each turn of the spiral duct. An oxidant inlet point marks the beginning of a next reaction zone, in particular, stirring of the reaction mixture with the oxidant on their path toward an activator 6; and initiation and continuation of the oxidizing process that is completed before the mixture stream reaches the next oxidant inlet (next zone) in the spiral duct. Gases may be drawn off from each zone through outlets 6. The initial mixture is fed into the reactor through an acceleration gateway 5. All oxidant and additive inlet devices are provided with dispersers 7.

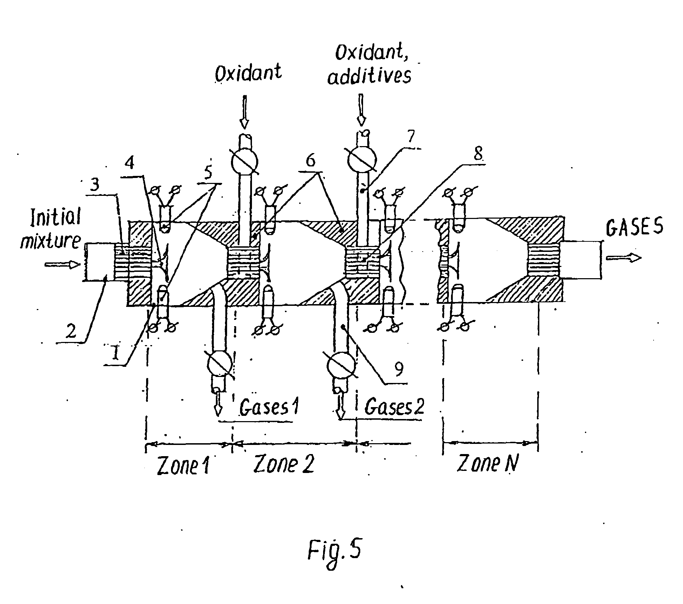

The direct-flow reactor for conducting multistage oxidizing cracking having clearly distinct zones separated by dividers, shown in Fig. 5, may have a round, square, rectangular or any other cross-section. The reaction mixture stream moves in the general direction along the common axis of the reactor and thermo-oxidizing zones. The front end wall of a reactor housing 1 has an inlet 2 to supply an initial mixture of hydrocarbons and oxidant. The inlet is provided with an acceleration gateway 3. A stream turbulizer 4 is provided at the point where the stream leaves the gateway and enters the first zone to deflect the mixture flow from the reactor axis toward the periphery, into contact with activators 5. The initial mixture fed in continuously pushes the products obtained in the first zone into the second and successive zones through further acceleration gateways 8 provided in dividing walls 6 between the zones. The turbulizers and activators are positioned identically in all the zones. Oxidant is fed into the second and successive zones through inlets 7 and acceleration gateways where the stream attains a higher speed to permit adequate intermixing of the oxidant with the reaction mixture stream. Gases produced in the zones may be drawn off through outlet ducts. The reactor may have a "wide" rectangular cross-section (and, therefore, "wide" reaction zones) provided with several reaction mixture inlets and a large number of activators to raise the throughput capacity of the reactor.

**Figs. 3, 4 and 5** do not show any reactor cooling systems, which are of traditional types.

## Claims

1. A method of converting hydrocarbons by heating the same in the presence of an oxidant, wherein a prepared initial mixture of hydrocarbons and an oxidant used at below the stoichiometric ratio (α = 0.2-0.5) is heated to a desired temperature below the self-ignition point and fed into the reaction zone of a reactor, where the oxidation process is initiated by an activator heated to slightly above the temperature of the heated mixture.

2. A method as claimed in claim 1, wherein the process is conducted in stages successively in two or more reaction zones of the reactor, each zone being supplied with additional quantities of the oxidant, in order to achieve a higher hydrocarbon cracking rate or alter the composition of the resultant gas mixture.

3. A method as claimed in claim 2, wherein the temperature to which the activators in different reaction zones are heated is different, and yet meets the conditions set out in claim 1.

4. A method as claimed in claims 1 to 3, wherein a cooled oxidant, or "cool" steam, or water is fed into the reaction zones, which are cooled from the outside in order to lower the temperature in the reaction zones of the reactor.

5. A method as claimed in claims 1 to 4, wherein mixtures of liquid and gaseous hydrocarbons of different compositions obtained in different reaction zones are drawn off for use as ready products.

6. A method as claimed in claims 1 to 5, wherein a hot oxidant is fed into the reaction zone of stages having a higher process initiation temperature than other stages.

7. A method as claimed in claims 1 to 5, wherein a part of the mixture of liquid and gaseous hydrocarbons obtained in a successive stage is recycled to the reaction zone of any preceding stage to achieve a higher conversion rate.

8. A reactor comprising a reaction chamber supplied continuously with an initial hydrocarbon mixture for conversion purposes, said reaction chamber comprising a plurality of consecutive reaction zones, each containing oxidant and additive inlets, activators, and gas collectors.

9. A reactor comprising a reaction chamber supplied continuously with an initial hydrocarbon mixture for conversion purposes, said reaction chamber comprising a plurality of consecutive reaction zones, each formed by structural dividers having ducts defining annular zones and allowing the reaction mixture to flow into a next zone.

10. A reactor as claimed in claim 9, wherein the dividers are disks.

11. A reactor as claimed in claim 9, wherein the annular zones are slit-shaped orifices with deflectors.

12. A reactor comprising a reaction chamber supplied continuously with an initial hydrocarbon mixture for conversion purposes, said reaction chamber comprising a plurality of consecutive reaction zones, each formed by a mixture inlet point, an oxidant (additive) inlet point, an activator point, and an outlet allowing the gaseous mixture to flow from one zone to the next one, arranged in a predetermined manner in the direction of the reaction mixture flow, in order to generate a spiral-shaped flow in the reactor duct.

13. A reactor comprising a direct-flow reaction chamber supplied continuously with an initial hydrocarbon mixture for conversion purposes, said reaction zone being bounded by structural partitions provided with acceleration gateways to permit passage of the reaction mixture of resultant gases.
